# EUROPÄISCHE PATENTANMELDUNG

(11) **EP 0 725 092 A2**
(43) Veröffentlichungstag der Anmeldung: **07.08.1996**
(21) Anmeldenummer: 96100820.8
(22) Anmeldetag: 20.01.1996
(51) Int. Cl.: C08F 265/04, C08F 2/22

(54) **Redispergierbare, pulverförmige Kern-Mantel-Polymere, deren Herstellung und Verwendung**

(30) Priorität: 06.02.1995 AT 202/95
(71) Anmelder: DSM Chemie Linz GmbH, 4021 Linz (AT)
(72) Erfinder: Saija, Leo M., Dr., I-20047 Brugheria (IT); Uminski, Maciej, Dr.-Ing., PL-03-921 Warszawa (PL); Pieh, Stefan, Dr., A-4060 Leonding (AT)
(74) Vertreter: Kunz, Ekkehard, Dr.

(57) **Zusammenfassung**

Redispergierbare, pulverförmige Kern-Mantel-Polymere bestehend aus
a) einem Kernpolymerisat aus 80 bis 100 Gew.% an Monomeren aus der Gruppe der Acrylate gegebenenfalls in Kombination mit Monomeren aus der Gruppe der Styrole und 0 bis 20 Gew.% an ethylenisch ungesättigter Sulfonsäureverbindung und
b) einem Mantelpolymerisat aus 60 bis 95 Gew.% an Monomeren aus der Gruppe der Acrylate gegebenenfalls in Kombination mit Monomeren aus der Gruppe der Styrole und 5 bis 40 Gew.% an ethylenisch ungesättigter Sulfonsäureverbindung,
wobei der Gehalt an Sulfonsäureverbindung im Mantel über dem Gehalt an Sulfonsäureverbindung im Kern liegt, sowie deren Herstellung und Verwendung als Zusatzmittel für hydraulische Bindemittel.

## Beschreibung

Polymerisate auf Basis von Butadien, Vinylacetat, Vinylchlorid, Vinylidenchlorid und Acrylsäureestern, die als Zusatzstoff zu hydraulischen Bindemitteln Verwendung finden sind bereits aus der Literatur bekannt.
Um flexible, dehnbare Zement-Kunststoff-Verbunde zu erzeugen werden bevorzugt weiche Polymere mit Glas- bzw. Einfriertemperaturen von unter 0°C verwendet. So sind beispielsweise in DE-OS 25 24 064 wässrige Dispersionen von Copolymerisaten mit einer Glastemperatur von -15°C bis -75°C beschrieben, die aus mindestens einem Ester der Acryl- oder Methacrylsäure, Vinylacetat, maximal 1,5 Gew.% 2-Acrylamido-2-methylpropansulfonsäure und weiteren Monomeren wie Acrylnitril, Styrol und Vinylchlorid bestehen. Diese Kunststoffdispersionen dienen als Klebestoffe in druckempfindlichen Klebestreifen, die gut auf Harzoberflächen, Papier und Metall haften. Der Nachteil dieser Dispersionen liegt vor allem in ihrer schlechten Zementverträglichkeit.
Kunststoffdispersionen die durch Emulsionspolymerisation von Estern aus ungesättigten Carbonsäuren, Styrol oder Vinyltoluol und einer olefinisch ungesättigten Sulfonsäure auf Basis von Acrylsäure oder Methacrylsäure erhalten werden, sind aus DE-OS 38 38 294 bekannt. Eine besonders geeignete Kombination ist 2-Ethylhexylacrylat, Styrol und 2-Acrylamido-2,2-dimethylethansulfonsäure.
Die Polymeren werden in Abmischungen mit Zement, Sand und weiteren Zuschlagstoffen für Beschichtungen, rißüberbrückende Überzugsmassen und Fugenmassen verwendet. Die derart hergestellten Baustoffmassen weisen jedoch eine nur sehr geringe Festigkeit auf.

Aus EP-A1-348 565 sind weiters Dispersionen aus sogenannten Kern-Mantel-Polymeren auf Basis von Alkylacrylaten oder Alkylmethacrylaten, die freie Carbonsäuregruppen aufweisen, bekannt.

Der Nachteil dieser Dispersionen, sowie der oben beschriebenen Dispersionen und aller bisher bekannten Dispersionen aus Polymerisaten mit einer Glastemperatur von kleiner als 10°C ist jedoch, daß sie nur schwer und unter Zusatz großer Mengen an Füllstoffen in Pulverform überführt werden können. Weiters weisen die so gewonnenen Pulver eine schlechte Redispergierbarkeit in Wasser auf.

Aufgabe der Erfindung war es demnach ein Polymer zu finden, das auf einfache Weise in ein sowohl im neutralen als auch im sauren oder alkalischen Medium redispergierbares Pulver überführt werden kann und das sich durch seine ausgezeichnete Kompatibilität als Zusatzmittel zu hydraulischen Bindemitteln unter gleichzeitiger Gewährleistung von Festigkeit, Flexibilität und Wasserbeständigkeit derselben eignet.

Unerwarteterweise konnte diese Aufgabe durch ein Kern-Mantel-Polymer auf Basis von Acrylaten gegebenenfalls in Kombination mit Styrolverbindungen gelöst werden, die im Kern und im Mantel einen unterschiedlichen Gehalt an einer ethylenisch ungesättigten Sulfonsäureverbindung aufweisen.

Gegenstand der vorliegenden Erfindung sind demnach ein redispergierbares pulverförmige Kern-Mantel-Polymere die aus
a) einem Kernpolymerisat aus 80 bis 100 Gew.% an Monomeren aus der Gruppe der Acrylate gegebenenfalls in Kombination mit Monomeren aus der Gruppe der Styrole und 0 bis 20 Gew. % an ethylenisch ungesättigter Sulfonsäureverbindung und
b) einem Mantelpolymerisat aus 60 bis 95 Gew.% an Monomeren aus der Gruppe der Acrylate gegebenenfalls in Kombination mit Monomeren aus der Gruppe der Styrole und 5 bis 40 Gew.% an ethylenisch ungesättigter Sulfonsäureverbindung bestehen, wobei der Gehalt an Sulfonsäureverbindung im Mantel über dem Gehalt an Sulfonsäureverbindung im Kern liegt.

Die Gruppe der Acrylate umfaßt dabei Acrylnitril, Acrylsäure, Methacrylsäure, Acrylamid, Methacrylamid und Acrylsäure- und Methacrylsäureester mit 1 bis 12 C-Atomen im Esterteil. Die Monomeren aus dieser Gruppe können gegebenenfalls substituiert sein, etwa durch Hydroxy oder Halogen.
Beispiele für solche Monomere sind Methylacrylat, Ethylacrylat, Butylacrylat, Hexylacrylat, 2-Ethylhexylacrylat, Decylacrylat, n-Dodecylacrylat, Methylmethacrylat, Ethylmethacrylat, 2-Chlorethylacrylat, Butylmethacrylat, Hydroxyethylmethacrylat, Methylolacrylamid und Hydroxypropylmethacrylat. Bevorzugte Monomere aus der Gruppe der Acrylate sind Acrylsäure- und Methacrylsäureester mit 1 bis 12 C-Atomen im Esterteil.
Besonders bevorzugt sind solche Ester mit 1 bis 8 C-Atomen im Esterteil.

Das erfindungsgemäße Polymer kann sowohl im Kern als auch im Mantel nur aus einem Monomeren aus dieser Gruppe aber auch aus einer Kombination aus zwei oder mehreren dieser Monomeren aufgebaut sein.
Weiters können sowohl für das Kern - als auch für das Mantelpolymerisat zusätzlich zu den Monomeren aus der Gruppe der Acrylate ein oder mehrere Monomere aus der Gruppe der Styrole mitverwendet werden. Die Gruppe der Styrole umfaßt dabei Styrol, sowie substituierte Styrole bzw. Styrolderivate wie beispielsweise alpha-Methylstyrol, Vinyltoluole wie 2-Methylstyrol, 3-Methylstyrol, 4-Methylstyrol oder Chlorstyrole wie 2-Chlorstyrol, 3-Chlorstyrol, 2,4-Dichlorstyrol, 2,5-Dichlor- und 2,6-Dichlorstyrol. Das Kernpolymerisat ist bei dem erfindungsgemäßen Polymeren aus 80 bis 100 Gew.%, bevorzugt aus 90 bis 99,5 Gew.% an Monomeren aus der Gruppe der Acrylate gegebenenfalls in Kombination mit Monomeren aus der Gruppe der Styrole aufgebaut. Das Mantelpolymerisat ist aus 60 bis 95 Gew.%, bevorzugt aus 75 - 93 Gew.% an einem oder mehreren der oben beschriebenen Monomeren aufgebaut.
Unter ethylenisch ungesättigten Sulfonsäureverbindungen sind Sulfonsäuregruppen enthaltende Monomere zu verstehen, die zumindest eine ethylenische Doppelbindung aufweisen. Bevorzugt sind dies Verbindungen der Formel I 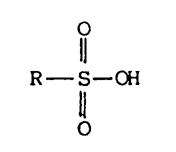 wobei R eine Acrylat-, Methacrylat-, Vinyl-, Allyl- oder Styrolgruppe bedeuted.

Beispiele dafür sind Vinylsulfonsäure, 4-Styrolsulfonsäure, 3-Sulfopropylacrylat, 3-Sulfopropylmethacrylat, 2-Sulfoethylacrylat, 2-Sulfoethylmethacrylat, 2-Acrylamidopropansulfonsäure, 2-Acrylamido-2-methyl-1-propansulfonsäure, 2-Methacrylamido-2-methyl-1-propansulfonsäure. Eine besonders bevorzugte ethylenisch ungesättigte Sulfonsäureverbindung ist 2-Acrylamido-2-methyl-1-propansulfonsäure.

Die ethylenisch ungesättigte Sulfonsäureverbindung wird zur Herstellung des Kernpolymerisates in einer Menge von 0 - 20 Gew.%, bevorzugt von 0,5 - 10 Gew.% und zur Herstellung des Mantelpolymerisates in einer Menge von 5 bis 40 Gew.%, bevorzugt von 7 - 25 Gew.% neben den bereits erwähnten Monomeren eingesetzt.
Der Gehalt an Sulfonsäureverbindung im Mantelpolymerisat liegt dabei stets über dem Gehalt an Sulfonsäureverbindung im Kernpolymerisat.

Die Auswahl der Monomeren, sowie ihre gewichtsmäßige Verteilung erfolgt bevorzugt so, daß das Kernpolymerisat eine Glastemperatur von etwa -65°C bis +30°C und das Mantelpolymerisat eine Glastemperatur von über +40°C aufweist. Bevorzugt sollte die Glastemperatur des Kernpolymerisates zwischen - 45°C und 0°C und die Glastemperatur des Mantelpolymerisates über +60°C liegen.

Das Gewichtsverhältnis von Kernpolymerisat zu Mantelpolymerisat liegt in den erfindungsgemäßen Kern-Mantel-Polymeren zwischen 95 : 5 und 60 : 40.

Die Herstellung der erfindungsgemäßen Polymere erfolgt durch eine 2-stufige Emulsionspolymerisation in wäßrigem Medium in Gegenwart von Initiatoren, Dispergatoren, Emulgatoren sowie gegebenenfalls von Reglern und Schutzkolloiden. Die Polymerisation wird bevorzugt in Form eines Zulaufverfahrens durchgeführt. Dabei wird im ersten Schritt eine Monomeremulsion aus den zur Herstellung des Kernpolymerisates geeigneten Monomeren in Kombination mit den oben erwähnten bei der Emulsionspolymerisation üblichen Hilfsstoffen vorbereitet. Ein Teil dieses Polymerisationsansatzes sowie eine wäßrige Initiatorlösung wird in auf Reaktionstemperatur erwärmtem Wasser vorlegt und nach Beginn der Polymerisation die restliche Monomeremulsion einerseits und eine zusätzliche Initiatorlösung, sowie gegebenenfalls weitere Polymerisationshilfsstoffe andererseits aus getrennten Vorlagen kontinuierlich zugeführt. Die Zufuhr erfolgt in einem Zeitraum von etwa 1 bis 4 Stunden bevorzugt von 1,5 bis 2,5 Stunden, wobei die Reaktionstemperatur in einem Bereich von wenigen Graden konstant gehalten wird. Anschließend wird das Reaktionsgemisch noch etwa 5 bis 60 Minuten, bevorzugt 10 bis 20 Minuten, in diesem Temperaturbereich gehalten. Währenddessen wird eine zweite Monomeremulsion mit den zur Herstellung des Mantelpolymerisates geeigneten Monomeren in Kombination mit den bereits erwähnten Polymerisatsionshilfsstoffen zubereitet. Die zweite Monomeremulsion wird sodann über einen Zeitraum von etwa 20 Minuten bis 2 Stunden, bevorzugt von etwa 30 Minuten bis 1,5 Stunden, zu dem im 1. Polymerisationsschritt erhaltenen Latex zugegeben. Zur gleichen Zeit wird wiederum über einen getrennten Zulauf eine wäßrige Initiatorlösung zulaufen gelassen. Nach beendeter Zugabe wird das Reaktionsgemisch gegebenenfalls zur Vervollständigung der Reaktion noch einige Minuten auf Reaktionstemperaturen gehalten, anschließend auf Raumtemperatur abgekühlt bzw. abkühlen gelassen und der so erhaltene Latex abfiltriert.
Die Polymerisationstemperatur liegt dabei zwischen etwa 20 und 100°C, vorzugsweise zwischen etwa 40 bis 90°C. Die Polymerisationstemperatur wird so eingestellt, daß die zum Einsatz kommenden Initiatoren ausreichend schnell in die zur Umsetzung benötigten reaktionsfähigen Radikale zerfallen. Die Menge an radikalbildenden Initiatoren beträgt in jedem Schritt etwa 0,1 bis 1 Gew.% bezogen auf die Gesamtmenge der eingesetzten Monomere des jeweiligen Schrittes. Besonders geeignet sind wasserlösliche anorganische Peroxide, von denen Peroxodisulfate wie Natrium-, Kalium- oder Ammoniumperoxydisulfat besonders bevorzugt sind. Gegebenenfalls erfolgt der Einsatz der Initiatoren in Kombination mit Reduktionsmitteln wie Formaldehydnatriumsulfoxylat, Natriumhydrogensulfit, Na-pyrosulfit, Na-dithionit, Na-thiosulfat und/oder Ascorbinsäure, Hydroxylamin oder Hydrazin. Das Reduktionsmittel kann zusäztlich mit einer als Beschleuniger wirkenden Menge eines Schwermetallsalzes wie Eisen-, Cobalt-, Cer- oder Vanadylsalzen kombiniert werden. Zur Vervollständigung des Umsatzes und zur Senkung der Restmonomerenteile kann auch eine nachträgliche Zugabe zusätzlicher Mengen an Initiator bzw. kombinierter Systeme erfolgen. Beispielsweise eignet sich dafür tert. Butylhydroperoxid in Kombination mit Formaldehydnatriumsulfoxylat.

Das mittlere Molekulargewicht der dispergierten Kern-Mantel-Polymeren ist neben der Glastemperatur und der Vernetzungsdichte die wichtigste molekulare Einflußgröße für entscheidende anwendungstechnische Eigenschaften der Produkte wie z. B. Klebrigkeit, Adhäsion, Viskoelastizität oder Zugfestigkeit. Wenn der angestrebte Bereich des Molekulargewichtes durch Veränderung der Polymerisationstemperatur bzw. der Initiatormenge nicht erreicht wird, können zusätzliche, das Molekulargewicht regelnde Substanzen wie z. B. n-Butylmercaptan, tert. Butylmercaptan, n-Dodecylmercaptan, Thioglykol, Thioglykolsäure u. a. in einer Menge von jeweils bis zu etwa 2 Gew.% bezogen auf die Gesamtmenge der für den jeweiligen Schritt eingesetzten Monomere verwendet werden. Die Zugabe des Reglers erfolgt nach Belieben, vorzugsweise wird er jedoch den jeweiligen Monomeremulsionen zugefügt.
Beim erfindungsgemäßen Polymerisationsverfahren können die in der Emulsionspolymerisation üblichen anionischen oder nichtionischen Emulgiermittel oder deren verträgliche Gemische eingesetzt werden, vorausgesetzt, daß sie sowohl in der Wasserphase als auch in der Monomerphase ausreichend löslich sind und keine störenden Wechselwirkungen mit den Monomeren und anderen Zusätzen auftreten. Als ionische Emulgatoren werden bevorzugt anionische Tenside verwendet. Besonders bewährt haben sich durch Ethoxylierung und Sulfatierung von C₈ - C₁₀ Alkylphenolen hergestellte Emulgiermittel. Sie leiten sich beispielsweise ab von Nonylphenol, Isononylphenol, Isooctylphenol, Triisobutylphenol und tritert. Butylphenol und tragen 3 bis 30 Ethylenoxid(EO)einheiten. Weitere Beispiele für mögliche anionische Emulgatoren sind Alkalimetallsalze von Alkylsulfonsäure wie z. B. Natriumdodecylsulfonat, Alkylarylsulfonsäuren wie z. B. Natriumdodecyl-benzolsulfonat so wie ethoxylierte und sulfonierte Fettalkohole mit einem C₈ - C₂₅-Alkylrest und einem Ethoxylierungsgrad von 3 bis 50 wie z. B. Natriumlaurylalkoholethersulfat mit 3EO-Einheiten. Als nichtionische Emulgiermittel werden bevorzugt Umsetzungsprodukte von C₈ - C₁₀ Alkylphenolen mit 3 bis 30 Mol Ethylenoxid verwendet.

Außerdem sind Ethoxylierungsprodukte von C₁₀ - C₂₀ Alkanolen wie z. B. Laurylalkoholpolyglykolether und Umsatzprodukte von Polypropylenglykol und Ethylenoxid geeignet. Bezogen auf die Monomermenge des jeweiligen Schrittes werden etwa 0,2 bis 5 Gew.%, bevorzugt 0,5 bis 2 Gew.% Emulgiermittel pro Schritt verwendet.

Zur Herstellung der wasserfreien, pulverförmigen Kern-Mantelpolymere wird der wie oben beschrieben hergestellte Polymerlatex gegebenenfalls mit einem geeigneten Antibackmittel wie etwa Microsilica, Silikate oder Ca-Carbonat vermischt und auf einen Feststoffgehalt von etwa 10 bis 50 %, bevorzugt 20 bis 40%, verdünnt. Die freien Säuregruppen können dann gegebenenfalls neutralisiert werden. Zur Neutralisation eignen sich Basen wie Ammoniak, Triethylamin, Monoethanolamin, Dimethylaminoethanol, sowie Hydroxide oder Carbonate der Alkali- und Erdalkalimetalle. Bevorzugt werden Hydroxide und Carbonate der Erdalkalimetalle, besonders bevorzugt Ca- oder Mg-hydroxid eingesetzt. Anschließend erfolgt eine Sprühtrocknung, wodurch die erfindungsgemäßen redispergierbaren pulverförmigen Kern-Mantel-Polymere erhalten werden.

Ein weiterer Gegenstand der vorliegenden Erfindung ist demnach ein 2-Stufen-Verfahren zur Herstellung redispergierbarer, pulverförmiger Kern-Mantel-Polymere, das dadurch gekennzeichnet ist, daß
a) im 1. Schritt eine Monomerenmischung aus 80 bis 100 Gew.% an Monomeren aus der Gruppe der Acrylate gegebenenfalls in Kombination mit Monomeren aus der Gruppe der Styrole und 0 bis 20 Gew.% an ethylenisch ungesättigter Sulfonsäureverbindung zubereitet und durch Emulsionspolymerisation zu dem Kernpolymerisat polymerisiert wird, währenddessen
b) eine Monomerenmischung aus 60 bis 95 Gew.% an Monomeren aus der Gruppe der Acrylate gegebenenfalls in Kombination mit Monomeren aus der Gruppe der Styrole und 5 bis 40 Gew.% an ethylenisch ungesättigter Sulfonsäureverbindung zubereitet wird, worauf
c) die Monomerenmischung aus b) im 2. Schritt der im 1. Schritt erhaltenen Polymeremulsion zugegeben und durch Emulsionspolymerisation zu dem Mantelpolymerisat polymerisiert wird, wodurch eine wäßrige Emulsion eines Kern-Mantel-Polymeren erhalten wird, die
d) gegebenenfalls nach Neutralisation der freien Säuregruppen, durch Sprühtrocknung in Pulverform gebracht wird.

Die erfindungsgemäßen pulverförmigen Kern-Mantel-Polymere eignen sich als Zusatzmittel zu hydraulischen Bindemitteln. Sie sind sowohl in neutralen als auch in sauren oder alkalischen Medien redispergierbar und mit hydraulischen Bindemitteln wie z. B. Zement, Kalk, Gips oder Anhydrit besonders gut verträglich und daher in vorteilhafter Weise in Baustoffmassen, die zusätzlich auch noch andere anorganische und/oder organische Bestandteile wie z. B. Kiesel, Sand, Verstärkungsfasern enthalten können, einsetzbar. Derartige Baustoffmassen auf Basis von erfindungsgemäße Polymere enthaltenden hydraulischen Bindemitteln weisen eine erhöhte Verarbeitbarkeit, Adhäsion, Flexibilität bzw. Elastizität auch bei niedrigen Temperaturen auf und sind beispielsweise als Reparaturmassen, Überzugsmassen, Bauklebemassen, Baustoffe, Fugenmassen, Dichtungsmassen, Straßenbelagsmassen, Zwischenschichten und Ausgleichsschichten geeignet.

Die erfindungsgemäßen Polymere eignen sich besonders gut als Bindemittel in zementhaltigen Zusammensetzungen. Zur Herstellung derartiger Zusammensetzungen wird beispielsweise die entsprechende Menge an hydraulischen Bindemitteln, beispielsweise Zement, bevorzugt Portlandzement vorgelegt und gegebenenfalls mit weiteren Zusätzen wie Sand, Kunststoffasern u.s.w. trocken vorgemischt.
Danach erfolgt der Zusatz des erfindungsgemäßen redispergierten Kern-Mantel-Polymeren. Es ist jedoch auch möglich, das erfindungsgemäße Polymere in Pulverform gemeinsam mit den hydraulischen Bindemittel vorzuglegen. Auf die Menge des hydraulischen Bindemittels bezogen, werden bevorzugt 5 bis 100, besonders bevorzugt 15 bis 50 Gew.% des erfindungsgemäßen Kern-Mantel-Polymeren, berechnet als Festharze, eingesetzt. Dies entspricht einem Faktor von Polymer zu anorganischem Bindemittel von 0,05 bis 1,0.

### Beispiel 1: Herstellung eines Kern-Mantel Polymerlatex

a) Zur Herstellung des Kernpolymerisates wurde eine Monomeremulsion mit der folgenden Zusammensetzung bereitet (Pre-Emulsion 1)

| | |
|---|---|
| DI Wasser (DI ....deionisiert) | 210 g |
| 30 %ige Natriumlauryl Sulfat (SLS)-Lösung | 14 g |
| 25 %ige Nonylphenol ethoxyliert, 15 EO (NP15)-Lösung | 18,3 g |
| Butylacrylat (BA) | 415 g |
| Methylmethacrylat (MMA) | 71,5 g |
| 2-Acrylamido-2-methyl-1-propansulfonsäure (AMPS) | 5 g |
| n-Dodecylmercaptan (nDSH) | 0,6 g |

770 g deionisiertes Wasser wurden in einem 2 l Rundkolben, ausgerüstet mit mechanischem Rührer, Rückflußkondensator, Thermometer, N₂-Einlaß und Einlässen für die Initiatorlösung und die Pre-Emulsion, vorgelegt und aufgewärmt.
Nach Erreichen der Reaktionstemperatur von 82 - 84 °C wurden folgende Lösungen zugegeben:
Initiatorlösung: Ammoniumpersulfat/DI Wasser 1,1 g//58,0 g
Pre-Emulsion 1: 30 g
Nach dem Polymerisationsstart (exothermer Peak) wurde die restliche Pre-Emulsion 1 sowie eine zusätzliche Initiatorlösung aus 1 g Ammoniumpersulfat in 55 g DI Wasser über einen Zeitraum von 120 Minuten zulaufen gelassen.
Die Temperatur wurde dabei in einen Bereich von 81 - 83 °C gehalten. Im Anschluß an die Zugabe wurde das Reaktionsgemisch noch 15 Minuten in diesem Temperaturbereich gehalten.
b) Zur Herstellung des Mantelpolymerisates wurde eine weitere Monomeremulsion mit folgender Zusammensetzung bereitet (Pre-Emulsion 2)

| | |
|---|---|
| DI Wasser | 40 g |
| 30 %ige SLS-Lösung | 2,5 g |
| 25 %ige NP 15-Lösung | 3,9 g |
| BA | 29,5 g |
| MMA | 100 g |
| AMPS | 27 g |
| nDSH | 1,3 g |

Die Pre-Emulsion 2 wurde nach den 15 Minuten über einen Zeitraum von 60 Minuten in den den Kernpolymerlatex enthaltenden Kolben zudosiert.
Gleichzeitig wurde über den gleichen Zeitraum eine weitere Initiatorlösung aus 0,5 g Ammoniumpersulfat in 40 g DI Wasser zulaufen gelassen. Nach beendeter Zugabe wurde der Kern-Mantel-Polymerlatex weitere 15 Minuten auf der Reaktionstemperatur gehalten, anschließend auf Raumtemperatur abkühlen gelassen und abfiltriert.
Das erhaltene Produkt wies einen Feststoffgehalt von 42 % und einen pH-Wert von 1,2 auf. Die Brookfield-Viskosität betrug (bei 100 rpm) 40 mPa.s.

### Beispiel 2: Herstellung eines Carbonsäure enthaltenden Kern-Mantelpolymerlatex

Die Herstellung des Polymerlatex erfolgte analog Beispiel 1, mit der Ausnahme, daß AMPS in beiden Pre-Emulsionen durch eine äquimolare Menge an Methacrylsäure (MAA) ersetzt wurde.
Der erhaltene Latex wies einen Feststoffgehalt von 41,5 % und einen pH-Wert von 2,2 auf. Die Brookfield-Viskosität betrug (bei 100 rpm) 34 mPa.s.

### Beispiel 3:

Es wurden Random Copolymere 3a) mit AMPS und 3b) mit MAA durch eine einstufige Emulsionspolymerisation unter Verwendung der Monomerzusammensetzung der Kombination von Pre-Emulsion 1 und 2 aus Beispiel 1 und 2 hergestellt.

### Beispiel 4:

Es wurden weitere AMPS-enthaltende Kern-Mantel-Polymerisate mit unterschiedlichen Monomeremulsionszusammensetzungen und Kern/Mantel-Gewichtsverhältnissen analog Beispiel 1 hergestellt.

Die jeweilige Zusammensetzung ist aus Tabelle 1 ersichtlich.

| Pre-Emulsion 1 | 4a (g) | 4b (g) | 4c (g) | 4d (g) | 4e (g) | 4f (g) |
|---|---|---|---|---|---|---|
| BA | 44,0 | 44,0 | 44,0 | 62,2 | 44.0 | 44,2 |
| MMA | 20,2 | 5,2 | 20,2 | 25,0 | 20,2 | 19,9 |
| STY | | 15,0 | | | | |
| AMPS | 0,5 | 0,5 | | 0,5 | 0,5 | 1,0 |
| SEMA | | | 0,4 | | | |

| Pre-Emulsion 2 | | | | | | |
|---|---|---|---|---|---|---|
| BA | 6,6 | 6,6 | 6,6 | | 6,6 | 6,6 |
| MMA | 25,4 | 25,4 | 25,5 | 9,0 | 26,1 | 21,8 |
| AMPS | 3,3 | 3,3 | | 3,3 | 2,6 | 6,5 |
| SEMA | | | 3,2 | | | |
| meq/g | 1,8 | 1,8 | 1,8 | 1,8 | 1,5 | 3,6 |
| Kern/Mantel | 65/35 | 65/35 | 65/35 | 88/12 | 65/35 | 65/35 |
| STY: Styrol SEMA: CH₂C(CH₃)COOCH₂CH₂SO₃H meq/g: milliequivalent Säuregruppen/g festen Polymer | | | | | | |

### Beispiel 5: Herstellung von redispergierbaren Pulvern

Die Latices aus Beispiel 1 bis 4 wurden mit Antibackmittel (Ca-Carbonat, 5 Gew.%) vermengt und auf einen Feststoffgehalt von 30 % verdünnt. Es wurden pro Polymerlatex zwei Proben verwendet, wobei jeweils bei einer Probe die Säuregruppen mit Ca-Hydroxid neutralisiert wurden.
Die Dispersionen wurden dann durch Sprühtrocknung mit einem LAB-PLANT SD04 Labormaßstab-Sprühtrockner in Pulverform gebracht.
Die so erhaltenen Pulver wurden sodann auf ihre Redispergierbarkeit geprüft.

Dazu wurde 1 g trockenes Pulver in 100 ml DI Wasser gegeben und 5 Minuten gerührt. Die erhaltene Mischung wurde in eine Sedimentationsrohr (IMOF cone) überführt. Die Bildung einer Latexphase wurde beobachtet und die Menge an gebildetem Sediment nach 6 Stunden gemessen um die Wasserredispergierbarkeit zu bestimmen.

Die Ergebnisse sind aus Tabelle 2 ersichtlich.

| Bsp. | Struktur | Säuregruppe | Säure (meq/g) | Ion | Redisp. | pH |
|---|---|---|---|---|---|---|
| 1 | Kern/Mantel | AMPS | 1,8 | H | + + | 1,85 |
| | | | | Ca | + + | 10,8 |
| 2 | Kern/Mantel | MAA | 1,8 | H | - - | 2,7 |
| | | | | Ca | + + | 9,2 |
| 3a) | Random | AMPS | 1,8 | H | - | 1,9 |
| | | | | Ca | + | 8,5 |
| 3b) | Random | MAA | 1,8 | H | - - | 3,0 |
| | | | | Ca | - | 9,8 |
| 4c) | Kern/Mantel | SEMA | 1,8 | H | + | 1,9 |
| | | | | Ca | + + | 8,7 |
| Redisp. Redispergierbarkeit erhalten + + Latexphase wird leicht erhalten, Sedimentationsvolumen nach 6 Stunden < 1,5 ml + Latexphase wird erhalten, Sedimentationsvolumen nach 6 Stunden < 3 ml - Latexphase wird nur schwer erhalten, Sedimentationsvolumen nach 6 Stunden > 3 ml -- Latexphase wird nicht erhalten. | | | | | | |

### Beispiel 6: Verwendung in Portlandzement

Zu einer 3 Teile Sand/1 Teil Zement (Italienischer Portlandzement Typ 425) Mischung wurden verschiedene Pulver aus Beispiel 5 in einer Menge zugegeben um ein Polymer/Zement-Verhältnis von 0,10 zu erzielen.
Anschließend wurden Wasser und Entschäumungsmittel (Lumitin IP3108, Fa. BASF) in einer Menge zugegeben, sodaß ein Wasser/Zement-Verhältnis von 0,50 und ein Entschäumer/Zement-Verhältnis von 0,01 erreicht wurde. Mittels eines Mischers vom Hobarttyp wurde ein Mörtel mit einer Nässedichte von 2,1 kg/dm³ erhalten, der zur Herstellung von 4 x 4 x 16 cm Mörtelbriquettes verwendet wurde, die auf ihre Druckfestigkeit (DF) Biegefestigkeit (BF) und Wasserabsorption (WA) (gemessen nach 7 Tagen Wasserkontakt) untersucht wurden.

Zum Vergleich wurden Proben untersucht, die keinen Polymerzusatz (V1) bzw. einen kommerziellen Acrylcopolymerlatex (Acryl 60, Fa. Thoro) (V2) ohne Sulfonsäuremonomere enthielten.

Die Ergebnisse sind in Tabelle 3 zusammengefaßt.

| Bsp. | Ion | DF (MPa) | BF (MPa) | WA (%) |
|---|---|---|---|---|
| 1 | H | 40,0 | 9,0 | 4,5 |
| 1 | Ca | 42,0 | 9,2 | 3,5 |
| V1 | | 40,0 | 7,0 | 8,5 |
| V2 | | 41,0 | 8,5 | 5,0 |

## Patentansprüche

1. Redispergierbare, pulverförmige Kern-Mantel-Polymere bestehend aus
a)einem Kernpolymerisat aus 80 bis 100 Gew.% an Monomeren aus der Gruppe der Acrylate gegebenenfalls in Kombination mit Monomeren aus der Gruppe der Styrole und 0 bis 20 Gew.% an ethylenisch ungesättigter Sulfonsäureverbindung und
b) einem Mantelpolymerisat aus 60 bis 95 Gew.% an Monomeren aus der Gruppe der Acrylate gegebenenfalls in Kombination mit Monomeren aus der Gruppe der Styrole und 5 bis 40 Gew.% an ethylenisch ungesättigter Sulfonsäureverbindung,
wobei der Gehalt an Sulfonsäureverbindung im Mantel über dem Gehalt an Sulfonsäureverbindung im Kern liegt.

2. Polymere nach Anspruch 1, dadurch gekennzeichnet, daß die Gruppe der Acrylate Acrylnitril, Acrylsäure, Methacrylsäure, Acrylamid, Methacrylamid sowie Acrylsäure- und Methacrylsäureester mit 1 bis 12 C-Atomen im Esterteil umfaßt.

3. Polymere nach Anspruch 1, dadurch gekennzeichnet, daß die Gruppe der Styrole Styrol, alpha-Methylstyrol, 2-Methylstyrol, 3-Methylstyrol, 4-Methylstyrol, 2-Chlorstyrol, 3-Chlorstyrol, 2,4-Dichlorstyrol, 2,5-Dichlorstyrol und 2,6-Dichlorstyrol umfaßt.

4. Polymere nach Anspruch 1, dadurch gekennzeichnet, daß als ethylenisch ungesättigte Sulfonsäureverbindung eine Verbindung der Formel I 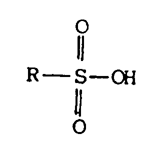 verwendet wird, in der R eine Acrylat-, Methacrylat-, Vinyl-, Allyl- oder Styrolgruppe bedeuted.

5. Polymere nach Anspruch 1, dadurch gekennzeichnet, daß das Gewichtsverhältnis von Kernpolymerisat zu Mantelpolymerisat zwischen 95 : 5 und 60 : 40 liegt.

6. Polymere nach Anspruch 1, dadurch gekennzeichnet, daß das Kernpolymerisat eine Glastemperatur von -65° bis +30°C und das Mantelpolymerisat eine Glastemperatur von über +40°C aufweist.

7. 2-Stufen-Verfahren zur Herstellung redispergierbarer, pulverförmiger Kern-Mantel-Polymere, dadurch gekennzeichnet, daß
a) im 1. Schritt eine Monomerenmischung aus 80 bis 100 Gew.% an Monomeren aus der Gruppe der Acrylate gegebenenfalls in Kombination mit Monomeren aus der Gruppe der Styrole und 0 bis 20 Gew.% an ethylenisch ungesättigter Sulfonsäureverbindung zubereitet und durch Emulsionspolymerisation zu dem Kernpolymerisat polymerisiert wird, währenddessen
b) eine Monomerenmischung aus 60 bis 95 Gew.% an Monomeren aus der Gruppe der Acrylate gegebenenfalls in Kombination mit Monomeren aus der Gruppe der Styrole und 5 bis 40 Gew.% an ethylenisch ungesättigter Sulfonsäureverbindung zubereitet wird, worauf
c) die Monomerenmischung aus b) im 2. Schritt der im 1. Schritt erhaltenen Kern-Polymerisatemulsion zugegeben und durch Emulsionspolymerisation zu dem Mantelpolymerisat polymerisiert wird, wodurch eine wäßrige Emulsion eines Kern-Mantel-Polymeren erhalten wird, die
d) gegebenenfalls nach Neutralisation der freien Sulfonsäuregruppen, durch Sprühtrocknung in Pulverform gebracht wird.

8. Verfahren nach Anspruch 7, dadurch gekennzeichnet, daß zur Neutralisation der freien Sulfonsäuregruppen Basen wie Ammoniak, Triethylamin, Monoethanolamin, Dimethylaminoethanol sowie Hydroxide oder Carbonate der Alkali - oder Erdalkalimetalle verwendet werden.

9. Verfahren nach Anspruch 7, dadurch gekennzeichnet, daß zur Neutralisation der freien Sulfonsäuregruppen Calcium- oder Magnesiumhydroxide oder -carbonate verwendet werden.

10. Verwendung der Kern-Mantel-Polymeren nach Anspruch 1, als Zusatzmittel zu hydraulischen Bindemitteln.
